Europäisches Patentamt

**(19) European Patent Office**

Office européen des brevets

(11) Publication number: **0 205 331**
**A2**

(12) # EUROPEAN PATENT APPLICATION

(21) Application number: **86304376.6**

(22) Date of filing: **09.06.86**

(51) Int. Cl.⁴: **B 29 C 55/14**

(30) Priority: **10.06.85 JP 125646/85**

(43) Date of publication of application:
**17.12.86 Bulletin 86/51**

(84) Designated Contracting States:
**BE DE FR GB NL**

(71) Applicant: **MITSUBISHI MONSANTO CHEMICAL COMPANY**
**5-2, Marunouchi 2-chome Chiyoda-ku Tokyo(JP)**

(72) Inventor: **Matsuda, Hitoshi**
**10-1 Komatsu 2-chome**
**Tsuchiura-shi Ibaraki(JP)**

(72) Inventor: **Okumura, Tsuguo**
**11-2 Matsushiro 2-chome**
**Yatabemachi Tsukuba-gun Ibaraki(JP)**

(72) Inventor: **Abe, Kazuharu**
**10-1 Komatsu 2-chome**
**Tsuchiura-shi Ibaraki(JP)**

(72) Inventor: **Mori, Kenji**
**29-8 Sakuragaokamachi**
**Tsuchiura-shi Ibaraki(JP)**

(74) Representative: **Paget, Hugh Charles Edward et al,**
**MEWBURN ELLIS & CO. 2/3 Cursitor Street**
**London EC4A 1BQ(GB)**

(54) Process for preparation of biaxially drawn poly-epsilon-capramide films.

(57) A biaxially drawn poly-ε-capramide film having good physical properties and characteristics well-balanced between the longitudinal direction and the transverse direction can be stably prepared by cooling a film-shaped melt of poly-ε-capramide, drawing the film in the longitudinal direction to form a longitudinally drawn film in which the crystal structure is composed solely of a γ-crystal, and then drawing the longitudinally drawn film in the transverse direction.

Croydon Printing Company Ltd.

## PROCESS FOR PREPARATION OF BIAXIALLY DRAWN
## POLY-ε-CAPRAMIDE FILMS

BACKGROUND OF THE INVENTION

1.    Field of the Invention

The present invention relates to a process for the preparation of a biaxially drawn poly-ε-capramide film. More particularly, it relates to a process in which a biaxially drawn poly-ε-capramide film having a high quality, in which the physical properties are uniform over the width of the film, is prepared at a high productivity by the sequential biaxial drawing technique.

2.    Description of the Related Art

Thermoplastic films having a high practical utility, i.e., improved physical properties such as strength at break, impact resistance, gas barrier property, and transparency are generally prepared by drawing an unoriented film in two directions rectangular to each other. Various methods have been proposed for biaxially drawing unoriented films. These methods are roughly divided into the simultaneous biaxial drawing method and the sequential biaxial drawing method.

The sequential biaxial drawing method is widely adopted as an industrially advantageous process for the production of a biaxially drawn film of a thermoplastic material represented by a polyester film. But, the simultaneous biaxial drawing method is seldom adopted. This is because, in the inflation method in which air is blown into a tubular film to effect drawing, it is difficult to obtain a high-quality film having a reduced thickness nonuniformity and in the method in which a film is gripped by clips in a tenter and simultaneous biaxial drawing is carried out in this state, the tenter clip holding mechanism is complicated, the apparatus is expensive, and the productivity is low because it is difficult to increase the processing speed.

Also in the production of biaxially drawn polyamide films, various sequential biaxial drawing methods have been proposed. For example, Japanese Examined Patent Publication No. 37-2,195 discloses a sequential biaxial drawing method for the production of a polyamide film, in which a monomer or oligomer is incorporated into the polyamide to improve the drawability. This method, however, has a problem in that the added monomer or oligomer makes the operation unstable and has a bad influence on the properties of the product. Furthermore, there have been proposed a method in which a film is drawn in one direction and the drawn film is then rolled by a roller in the rectangular direction (Japanese Examined Patent Publications No. 38-5,986 and No. 39-12,496), a method in which crystallization of a film at the roll-drawing is controlled under special conditions (Japanese Examined Patent Publication No. 47-3,195), a method in which grooves are formed on a longitudinally drawn film (Japanese Examined Patent Publication No. 48-8,868), a method in which a polyamide containing a xylene group is incorporated in a polyamide (Japanese Unexamined Patent Publications No. 52-47,073 and No. 52-104,565), and a method in which the degree of the plane orientation of the α-type crystal of a polyamide is controlled (Japanese Examined Patent Publication No. 55-37,407). However, none of these methods is satisfactory as a method for preparing a biaxially drawn film having quality at a high efficiency.

It is common knowledge to persons skilled in the art that sequential biaxial drawing of a polyamide film is very difficult. This is because the crystallization rate of a polyamide is extremely high and strong hydrogen bonds are formed among molecules. From the results of experiments made by us, it has been found that if the sequential biaxial drawing method comprising drawing in the longitudinal direction and subsequent drawing in the transverse direction is applied to a polyamide film, intermolecular and intramolecular hydrogen bonds are oriented in parallel to the film surface, that is, in the transverse drawing direction, by drawing in the longitudinal direction, and this orientation renders drawing in the transverse direction very difficult.

SUMMARY OF THE INVENTION

In view of the foregoing, it is a primary object of the present invention to provide a process for preparing a biaxially drawn poly-ε-capramide film, by which the film having good physical properties and characteristics well-balanced between the longitudinal direction and the transverse direction can be stably prepared.

In accordance with the present invention, there is provided a process for the preparation of a biaxially drawn poly-ε-capramide film, which comprises cooling a film-shaped melt of poly-ε-capramide, drawing the film in the longitudinal direction to form a longitudinally drawn film in which the crystal structure is composed solely of a γ-crystal, and then drawing the longitudinally drawn film in the transverse direction.

DESCRIPTION OF THE PREFERRED EMBODIMENTS

The present invention will now be described in detail.

The poly-ε-capramide used as the starting material in the present invention is a homopolymer of ε-caprolactam, generally called "nylon 6", and a copolymer is not included. Various resin additives such as a lubricant, an antistatic agent, an antiblocking agent, a stabilizer, a dye, a pigment, and inorganic fine particles may be incorporated into this homopolymer, so far as a bad influence is not given to the properties of the film.

In the process of the present invention, preferably the

starting poly-ε-capramide is heated at a temperature higher than the melting point by an extruder and is extruded in the form of a film-shaped melt, and the extrudate is cooled by a chill roll to form a substantially amorphous unoriented film (hereinafter referred to as "undrawn film"). The higher the temperature of the chill roll, the more readily an α-type crystal is formed in the as-drawn film. Accordingly, preferably the temperature of the chill roll is set below 40°C.

According to the process of the present invention, preferably the undrawn film is then drawn in the longitudinal direction (hereinafter referred to as "longitudinal drawing") preferably by the roll type longitudinal drawing method. By the roll type longitudinal drawing method is meant the drawing method in which the film is drawn in the extrusion direction, that is, in the longitudinal direction by using a roll type longitudinal drawing machine. A known roll type longitudinal drawing machine may be used in the present invention.

The substantial temperature condition necessary for obtaining a longitudinally drawn film in which the crystal structure is composed solely of a γ-crystal is suitably 40 to 100°C, preferably 45 to 80°C, and the draw ratio is preferably 2.7 to 3.5. If the film temperature at the longitudinal drawing is lower than 40°C, the film is often broken or devitrified and smooth longitudinal drawing becomes difficult. If longitudinal drawing is carried out at a temperature higher than 100°C, an α-crystal tends to be formed and the intended film composed solely of a γ-crystal cannot be obtained. If the draw ratio at the longitudinal drawing step is lower than 2.7, sufficient orientation cannot be imparted to the longitudinally drawn film, and if the draw ratio exceeds 3.5, an α-crystal is formed in the longitudinally drawn film and the intended longitudinally drawn film composed solely of a γ-crystal cannot be obtained.

If an α-crystal is formed in the longitudinally drawn film, at the time of subsequent drawing in the transverse direction (hereinafter referred to as "transverse drawing"), a kink band is formed in the film or the film is readily broken. Accordingly, it is necessary to prepare a longitudinally drawn film, in which the crystal structure is composed solely of a γ-crystal, by appropriately combining the conditions for cooling the film-shaped melt and the conditions for longitudinally drawing the undrawn film.

The crystal structure of poly-ε-capramide and the method for determining this crystal structure are described, for example, in J. Appl. Polymer Sci., 21, 821, 1971, and the crystal structure of the longitudinally drawn film can be easily determined by X-ray diffractometry.

A known tenter type transverse drawing method may be adopted for drawing the longitudinally drawn film composed solely of a γ-crystal in the transverse direction.

According to the process of the present invention, preferably, the temperature for transverse drawing is higher than the temperature adopted at the longitudinal drawing step but not higher than 160°C, especially 45 to 130°C, and the transverse draw ratio is 2.7 to 6.0. If the lateral drawing temperature is not higher than the longitudinal drawing temperature, the film is readily broken, and if the transverse drawing temperature is higher than 160°C, drawing unevenness or thickness nonuniformity is readily caused in the film and it is difficult to impart a sufficient orientation to the drawn film, and therefore, a film having a high quality cannot be obtained. If the draw ratio at the transverse drawing step is lower than 2.7, sufficient orientation cannot be given to the drawn film, and if the draw ratio exceeds 6.0, the film is readily broken.

The biaxially drawn poly-ε-capramide film thus

obtained according to the process of the present invention shows good properties in the as-obtained state, but in order to further improve the physical properties in a specific direction, the film may be drawn in the longitudinal or transverse direction. Moreover, in order to impart an enhanced dimensional stability, preferably the drawn film is heat-treated according to customary procedures. Preferably, the temperature-time conditions for this heat treatment are such that the biaxially drawn film is maintained at a temperature higher than any of the drawing temperatures employed in the longitudinal and transverse drawing steps, but lower than the melting point of the base resin within 5 minutes, especially within 1 minute. The heat treatment may be carried out under tension or when relaxed, or under tension and when relaxed in combination.

The thus-obtained biaxially drawn poly-ε-capramide film has good physical properties and these good physical properties are uniform in the transverse direction, i.e., over the width thereof, and therefore, the film has a high practical utility.

As is apparent from the foregoing description, the present invention provides a process in which a biaxially drawn poly-ε-capramide film having good physical properties and uniformity over the width thereof can be stably prepared at a high productivity, and the prominent effects described below can be attained according to the process of the present invention. Therefore, the industrial utilization value of the present invention is very great.

(1) According to the process, the rate of crystallization is very high, and therefore, a biaxially drawn poly-ε-capramide film, the preparation of which has been considered difficult by the sequential biaxial drawing method, can be stably prepared at a high productivity by the sequential biaxial drawing method.

(2)   According to the process of the present invention, an ordinary sequential biaxial drawing equipment comprising a roll type longitudinal drawing machine and a tenter type transverse drawing machine as main machines can be used, and therefore, the equipment costs are small and the production can be performed at a high speed.

(3)   When the process of the present invention is adopted, only by controlling the conditions for chilling the film-shaped melt formed by melting and extruding starting poly-ε-capramide by an extruder and the conditions for drawing the undrawn film in the longitudinal direction, and confirming that the longitudinally drawn film is composed solely of a γ-crystal, a biaxially drawn film can be stably prepared, and therefore, the process control is very simple and the industrial advantage is very great.

(4)   According to the process of the present invention, a special additive need not be added to poly-ε-capramide, and even if a special method in which grooves are formed on the film is not adopted, a high-quality biaxially drawn poly-ε-capramide having physical properties uniform in the transverse direction can be stably prepared at a high productivity.

The present invention will now be described in detail with reference to the following examples, that by no means limit the scope of the invention.

In the following examples, determination of the crystal structure of the longitudinally drawn film and evaluation of the physical properties of the finally obtained film were performed according to methods described below.

(1)   Determination of Crystal Structure of Longitudinally Drawn Film

The crystal structure of the longitudinally drawn film was determined according to the X-ray diffractometry (photographic method).   More specifically, the longitudinally drawn film was sampled from the process and X-rays were projected onto the film surface vertically thereto, and diffracted X-rays from the film were photographed for determination. At the X-ray diffractometry, a ROTOR FLEX supplied by Rigaku Denki was used, and CuKα rays generated at a tube voltage of 40 KV and a tube current of 25 mA, and passed through a nickel filter were used as X-rays. In the slit system, a collimater having a diameter of 1 mm was used as a divergence slit, and a receiving slit was used as 1/2 x 1.

If diffraction images were present in the vicinity of $2\theta = 20.2°$ and $24.0°$ in the equatorial direction under the above measurement conditions, it was determined that the crystal structure was composed of an α-crystal, and when diffraction images were present in the vicinity of $2\theta = 21.8°$ in the equatorial direction and in the vicinity of $2\theta = 11°$ in the meridian direction, it was determined that the crystal structure was composed of a γ-crystal (see, for example, J. Appl. Polymer Sci., 21, 821, 1977).

(2) Thickness (μm) of Film

The thickness was measured at intervals of 30 mm over the width of the film, and the mean value was calculated.

(3) Thickness nonuniformity (%) of Film

The thickness nonuniformity was calculated according to the following formula:

Thickness nonuniformity $= \left[ (A - B)/C \right]$ x 100

In the above formula, A represents the maximum thickness in the width of the film, B represents the minimum thickness in the width thereof, and C represents the average thickness in the width thereof.

If the thickness nonuniformity is smaller than 10%, it is judged that the thickness precision is good.

(4) Measured Draw Ratio

A circle having a diameter of 30 mm was drawn on an undrawn film by a felt pen. With respect to the circle before the drawing and the circle after the drawing, the length in the longitudinal direction (machine direction) and the length in the transverse direction were measured, and the ratio was calculated and designated as the measured draw ratio.

(5)  Strength at Break (kg/mm$^2$) and Elongation at Break (%)

A test piece having a width of 10 mm and a length of 100 mm was cut from the film. The measurement was carried out at a chuck distance of 50 mm, a pulling speed of 50 mm/min, an atmosphere temperature of 25°C, and a relative humidity of 40% by using an autograph (Model DSS-2000 supplied by Shimadzu Corporation).

(6)  Pinhole-Resistant Strength (kg/mm)

A circular frame having an inner diameter of 100 mm was attached to a crosshead of an autograph (Model DSS-2000), and a sample film was fixed under tension to the frame. A needle having on the top end a spherical face having a diameter of 0.5 mm was attached through a round metal rod to a load cell attached to another head of the autograph. By moving the crosshead at a rising speed of 50 mm/min, the needle was caused to penetrate the sample film. The strength (g) on breaking of the film was measured and the value obtained by dividing the measured strength by the thickness (mm) of the film was designated as the pinhole-resistant strength.

(7)  Boiling Water Shrinkage (%)

A product film was conditioned in an atmosphere maintained at a temperature of 25°C and a relative humidity of 45%, and a square mark having one side of 80 mm was drawn on the surface of the film so that respective sides were parallel to the longitudinal and transverse directions of the film. The sample film was immersed in boiling water for 5 minutes, taken out from the boiling water, and allowed to stand in an atmosphere maintained at a temperature of 25°C and a relative humidity of 45% for 24 hours. The size of the square mark after immersion in boiling water was measured and the boiling water shrinkage was calculated according to the following formulae:

Boiling water shrinkage in longitudinal direction

$$= \left[ (l_1 - l'_1)/l_1 \right] \times 100$$

Boiling water shrinkage in transverse direction

$$= \left[ (l_2 - l'_2)/l_2 \right] \times 100$$

In the above formulae, $l_1$ and $l'_1$ represent the lengths of the side along the longitudinal direction of the film before and after the immersion, respectively, and $l_2$ and $l'_2$ represent the lengths of the side along the transverse direction of the film before and after the immersion, respectively. Note, preferably the boiling water shrinkage in either the longitudinal direction or the transverse direction is not more than about 4%.

Examples 1 through 4

Poly-ε-capramide (Novamid 1020CA supplied by Mitsubishi Chem. Ind. Ltd.) having a relative viscosity of 3.5 was heated and melted at 260°C by using an extruder having a diameter of 65 mm, to which a T-die was attached, and was extruded in the form of a molten film. The filmy melt was cooled by a chill roll maintained at a temperature shown in Table 1 to obtain a substantially amorphous unoriented undrawn film having a thickness of 150 μm and a width of about 350 mm.

The undrawn film was transferred at a speed of 8 m/min to a longitudinal drawing machine comprising a plurality of rolls having a diameter of 150 mm and a width of 700 mm, and longitudinally drawn under the conditions shown in Table 1. The longitudinally drawn film was transferred to a tenter type transverse drawing machine and laterally drawn at a temperature of 70°C and a draw ratio of 4.5. The film was then heat-treated for 5 seconds while keeping the width constant.

According to the process described above, the production of a film was conducted continuously for 5 hours. The obtained results are shown in Tables 1 and 2.

Comparative Examples 1 through 4

By using the same poly-ε-capramide as used in Examples 1 through 4, a longitudinally drawn film was prepared in the same manner as described in Examples 1 through 4 except that the operation conditions were changed as shown in Table 1. In the same manner as described in Examples 1 through 4, the longitudinally drawn film was transferred to the tenter type transverse drawing machine where it is drawn at a temperature of 70°C and a draw ratio of 4.5, and then heat-treated for 5 seconds while keeping the width constant.

The production of a film according to the above-mentioned method was conducted continuously for 5 hours. The obtained results are shown in Table 1.

## Table 1

| | Chill roll temperature (°C) | Longitudinal drawing conditions | | Crystal structure of longitudinally drawn film | Transverse drawing state |
|---|---|---|---|---|---|
| | | Temperature (°C) | Draw ratio | | |
| Example 1 | 20 | 45 | 2.9 | γ-type alone | good |
| Example 2 | 20 | 45 | 3.3 | γ-type alone | good |
| Example 3 | 35 | 60 | 3.5 | γ-type alone | good |
| Example 4 | 35 | 80 | 2.9 | γ-type alone | good |
| Comparative Example 1 | 80 | 50 | 3.3 | both α-type and γ-type | devitrification |
| Comparative Example 2 | 20 | 110 | 3.0 | both α-type and γ-type | formation of kink bands |
| Comparative Example 3 | 35 | 140 | 2.5 | α-type alone | formation of kink bands, breaking |
| Comparative Example 4 | 35 | 60 | 4.0 | both α-type and γ-type | formation of kink bands, breaking |

<u>Table 2</u>

| | Example 1 | Example 2 | Example 3 | Example 4 |
|---|---|---|---|---|
| Thickness (μm) | 15 | 15 | 15 | 15 |
| Thickness nonuniformity (%) | 10 | 8 | 8 | 9 |
| Measured draw ratio | | | | |
| longitudinal direction | 2.9 | 3.3 | 3.1 | 3.0 |
| lateral direction | 3.0 | 3.3 | 3.1 | 3.2 |
| Strength at break $(kg/mm^2)$ | | | | |
| longitudinal direction | 28.0 | 28.2 | 28.2 | 28.1 |
| lateral direction | 28.4 | 28.5 | 28.4 | 28.3 |
| Elongation at break (%) | | | | |
| longitudinal direction | 96 | 73 | 93 | 90 |
| lateral direction | 90 | 71 | 90 | 88 |
| Boiling water shrinkage (%) | | | | |
| longitudinal direction | 2.5 | 3.2 | 3.0 | 3.0 |
| lateral direction | 3.0 | 3.0 | 2.9 | 2.9 |
| Pinhole-resistant strength (g) | 650 | 600 | 640 | 610 |

- 13 -

From the results shown in Tables 1 and 2, the following can be seen.

(1) According to the process of the present invention, devitrification or the formation of kink bands is not caused during the drawing operation, and even if the operation is conducted for a long time continuously, the film is not broken and a biaxially drawn film can be stably prepared.

(2) A biaxially drawn film obtained according to the process of the present invention has excellent physical properties and the characteristics are well-balanced between the longitudinal direction and the transverse direction.

(3) On the other hand, when the process of the present invention is not adopted, devitrification or the formation of kink bands is caused during the drawing operation. Moreover, the film is broken during the drawing operation. Therefore, it is impossible to stably prepare a biaxially drawn film having good properties.

## CLAIMS

1. A process for the preparation of a biaxially drawn poly-ε-capramide film, which comprised cooling a film-shaped melt of poly-ε-capramide, drawing the film in the longitudinal direction to form a longitudinally drawn film in which the crystal structure is composed solely of a γ-crystal, and then drawing the longitudinally drawn film in the transverse direction.

2. A process for the preparation of a biaxially drawn poly-ε-capramide film according to claim 1, wherein the film-shaped melt is cooled below 40°C and the film is drawn in the longitudinal direction at a temperature of 40 to 100°C and a draw ratio of 2.7 to 3.5.

3. A process for the preparation of a biaxially drawn poly-ε-capramide film according to claim 2, wherein the temperature at which the film is drawn in the longitudinal direction is 45 to 80°C.

4. A process for the preparation of a biaxially drawn poly-ε-capramide film according to claim 2 or claim 3 wherein the longitudinally drawn film is then drawn in the transverse direction at a temperature higher than the temperature adopted for the longitudinal drawing but not higher than 160°C and at a draw ratio of 2.7 to 6.0.

5. A process for the preparation of a biaxially drawn poly-ε-capramide film according to any one of claims 1 to 4, wherein the longitudinal drawing and the transverse drawing are effected by using a roll type longitudinal drawing machine and a tenter type transverse drawing machine, respectively.